# FASCICULE DE BREVET EUROPEEN

(11) **EP 3 449 084 B1**
(45) Date de publication et mention de la délivrance du brevet: **06.05.2020**
(21) Numéro de dépôt: 17704286.8
(22) Date de dépôt: 15.02.2017
(51) Int. Cl.: E21B 17/08, F16L 37/127

(54) **CONNECTEUR POUR ASSEMBLER DEUX TRONÇONS DE COLONNE MONTANTE AVEC UNE BAGUE DE VERROUILLAGE EXTERNE ET DES MOYENS DE RETENUE**
VERBINDER ZUM ZUSAMMENBAU VON ZWEI ABSCHNITTEN EINES STEIGROHRS MIT EINEM ÄUSSEREN VERRIEGELUNGSRING UND BEFESTIGUNGSMITTELN
CONNECTOR FOR ASSEMBLING TWO SECTIONS OF A RISER, COMPRISING AN OUTER LOCKING RING AND SECURING MEANS

(30) Priorité: 26.04.2016 FR 1653702
(43) Date de publication de la demande: 06.03.2019
(73) Titulaire: IFP Energies nouvelles, 92852 Rueil-Malmaison (FR)
(72) Inventeur: PERSENT, Emmanuel, 78290 Croissy sur Seine (FR); PAPON, Gerard, 78690 Les Essarts le Roi (FR); TRIADOU, Jeremie, 78955 Carrières sous Poissy (FR)
(74) Mandataire: IFP Energies nouvelles
(86) Numéro de dépôt international: PCT/EP2017/053419
(87) Numéro de publication internationale: WO 2017/186373

(56) Documents cités:
- WO-A2-2015/071411
- US-A1- 2004 207 202
- US-A2- 2014 232 109

## Description

La présente invention concerne le domaine des colonnes montantes en mer, notamment pour la production d'un effluent pétrolier, le conditionnement (de l'anglais « completion ») ou le reconditionnement (de l'anglais « work-over ») d'un puits. En particulier, l'invention concerne un connecteur de colonne montante.

Une colonne montante (ou « riser ») est constituée par un ensemble d'éléments tubulaires de longueur comprise entre 9 et 22 m (30 et 70 feet), assemblés par des connecteurs. Les éléments tubulaires sont généralement constitués d'un tube muni de connecteurs à chaque extrémité. Les éléments tubulaires sont assemblés par ces connecteurs sur le lieu de conditionnement ou de reconditionnement, à partir d'un support flottant. La colonne descend dans la tranche d'eau au fur et à mesure de l'assemblage des éléments tubulaires, jusqu'à atteindre la tête de puits située sur le fond marin. Un système de liaison fond/surface (colonne montante) de « complétion » est utilisé pour installer dans le puits la colonne de production et la suspension des tubages au travers d'une colonne montante de forage et du BOP. Un système de liaison fond/surface (colonne montante) pour le reconditionnement (« workover ») est généralement utilisé à la place d'une colonne montante de forage pour intervenir sur le puits au travers des têtes de puits sous-marines, et peut également être utilisé pour l'installation des têtes de puits sous-marines.
Dans l'optique d'exploiter des puits à des profondeurs d'eau pouvant atteindre 3500 m ou plus, le poids de la colonne montante devient très pénalisant.
Par ailleurs, la nécessité de diminuer le temps d'assemblage des colonnes montantes est d'autant plus critique que la profondeur d'eau, et donc la longueur de la colonne, sont importantes.
Une autre problématique des connecteurs de colonne montante concerne l'inspection et la maintenance des moyens de verrouillage. En effet, en général, les moyens de verrouillage utilisés ne sont pas entièrement démontables. Il n'est donc pas possible d'inspecter l'ensemble des moyens de verrouillage, en particulier dans le cas d'une bague de verrouillage.

Un premier type de solution a été développé pour les connecteurs de colonne montante, il s'agit des connecteurs à connexion vissée. Pour réaliser de telles connexions, on peut utiliser la méthode de l' « upset pipe », qui consiste à générer une surépaisseur des extrémités des tubes par forgeage à chaud. Cette surépaisseur peut atteindre deux fois l'épaisseur de la partie courante. Ce type de connexion nécessite un outillage particulier pour sa mise en œuvre, et le nombre de connexions/déconnexions est limité, car la connexion est précontrainte au moyen d'un couple de serrage important, ce qui peut générer un endommagement du filetage par les pressions de contact élevées au niveau des filets.
Un deuxième type de solution a été développé pour les connecteurs de colonne montante, il s'agit des connexions avec manchon précontraint. Ce type de connecteur nécessite un outillage particulier pour l'assemblage.
La demande de brevet US 2014/0232109 décrit une autre conception de connecteur de colonne montante. Le connecteur décrit dans cette demande de brevet comporte des segments de verrouillage mobiles en rotation autour d'un pivot, et dont des dentures internes coopèrent avec des rainures périphériques réalisées dans les tubes à assembler. Cette connexion nécessite également un outillage spécifique pour l'assemblage des tronçons de colonne montante.

Une autre solution a été envisagée, il s'agit des connexions à baïonnette.
Parmi les connecteurs à baïonnette, on connaît de la demande de brevet US 7883293 un connecteur de colonne montante à baïonnette, qui comprend un élément femelle et un élément mâle qui s'engagent l'un dans l'autre. Le connecteur décrit dans cette demande de brevet n'est pas entièrement démontable (en particulier la partie femelle), ce qui limite la maintenance et l'inspection du connecteur. De plus, pour ce connecteur, l'étanchéité est une étanchéité métal-métal qui est réalisée sur des portées coniques, bien que le connecteur ne soit pas précontraint.
De plus, on connaît de la demande de brevet US 2004/0207202 un connecteur de colonne montante à baïonnette, qui comprend deux éléments connecteurs, un manchon de guidage et d'étanchéité, et une bague de verrouillage. Le connecteur décrit dans cette demande de brevet utilise un pion en tant que moyen de retenue, le pion étant situé au centre de la bague de verrouillage, et s'engage dans le manchon d'étanchéité. Ces moyens de retenue ne permettent pas un guidage des moyens de connexion lors de la connexion. De plus, ces moyens de retenue nécessitent un positionnement relatif précis des éléments constituant le connecteur. De plus, les moyens de blocage de la bague de verrouillage sont complexes : il faut que les orifices pour le passage du pion soient parfaitement alignés, ce qui implique des contraintes de fabrication et de montage. Un autre inconvénient de cette solution, est qu'elle peut utiliser également une surépaisseur du tronçon de colonne montante, ce qui nécessite une fabrication complexe des tronçons de colonne montante.
En outre, on connaît de la demande de brevet FR 2866942 (US 7341281) un connecteur de colonne montante à baïonnette comprenant un élément mâle, un élément femelle, une bague de verrouillage et des moyens de blocage de la bague de verrouillage.
Le connecteur décrit dans cette demande de brevet n'est pas entièrement démontable, ce qui limite la maintenance et l'inspection du connecteur. Un autre connecteur peut être trouvé dans le document WO 2015/071411.

Pour pallier ces inconvénients, la présente invention concerne un connecteur pour assembler deux tronçons de colonne montante, le connecteur comportant deux tronçons de colonne montante assemblés par une bague de verrouillage au moyen de deux connexions à baïonnette. Ainsi, la bague de verrouillage est entièrement démontable, et donc inspectable. De plus, le connecteur comporte des moyens de retenue de la bague de verrouillage par rapport aux éléments connecteur, de préférence de part et d'autre de la bague de verrouillage. Ainsi, il est possible de réaliser les fonctions de maintien et de guidage lors de la connexion, tout en conservant un assemblage simple et rapide du connecteur, ne nécessitant pas d'outillage particulier.

### Le dispositif selon l'invention

L'invention concerne un connecteur pour assembler deux tronçons de colonne montante, comportant un premier tronçon de colonne prolongé par un premier élément connecteur pourvu d'une première série de tenons sur sa surface extérieure, un deuxième élément de tronçon de colonne prolongé par un deuxième élément connecteur pourvu d'une deuxième série de tenons sur sa surface extérieure, une bague de verrouillage assemblant lesdits deux éléments connecteurs, ladite bague de verrouillage comprenant une troisième et une quatrième séries de tenons sur sa surface intérieure aptes à coopérer respectivement avec lesdites première et deuxième séries de tenons. Ledit connecteur comporte en outre des moyens de retenue de ladite bague de verrouillage par rapport auxdits éléments connecteur, lesdits moyens de retenue étant au moins partiellement démontables.
Selon un mode de réalisation, lesdits moyens de retenue sont situés aux deux extrémités de ladite bague de verrouillage.
Selon une mise en œuvre, ledit connecteur comporte en outre un manchon d'étanchéité, ledit manchon d'étanchéité étant emmanché dans lesdits deux éléments connecteurs, de préférence en étant fixé dans un desdits premier ou deuxième éléments connecteurs.

Conformément à une conception, lesdits moyens de retenue de ladite bague de verrouillage comprennent des moyens de maintien de ladite bague de verrouillage à une première extrémité de ladite bague de verrouillage, et des moyens de guidage de ladite bague de verrouillage à la deuxième extrémité de ladite bague de verrouillage.
Avantageusement, lesdits moyens de maintien de ladite bague de verrouillage comportent au moins une saillie pénétrant dans une rainure de ladite bague de verrouillage.
De préférence, lesdits moyens de guidage de ladite bague de verrouillage comportent au moins une surface cylindrique.
Selon une variante de réalisation, chaque moyen de retenue est formé par deux demi-anneaux fixés ensemble.
De manière avantageuse, chaque demi-anneau est monté dans une gorge formée dans l'un desdits éléments connecteurs.
Alternativement, chaque élément connecteur comporte un moyen de retenue.
De manière avantageuse, un moyen de retenue comporte au moins un pion démontable. Conformément à un mode de réalisation, les tenons desdites première et deuxième séries de tenons sont en saillie sur des plages angulaires identiques.
Selon une caractéristique, chaque série de tenons comporte au moins une rangée de tenons, et de préférence deux rangées de tenons.
Avantageusement, lesdits tenons de rangées de tenons consécutives d'une même série de tenons sont alignées.
Selon une mise en œuvre, lesdites rangées de tenons d'au moins une série de tenons sont inscrites dans des diamètres identiques.
Selon une conception, les rangées de tenons de chaque série de tenons comportent au moins trois, de préférence quatre tenons.
Selon une caractéristique, chaque série de tenons comporte au moins deux rangées de quatre tenons.
De manière avantageuse, ledit premier élément connecteur comporte, en son extrémité, au moins un créneau s'engageant dans un creux dudit deuxième élément connecteur.
Conformément à un mode de réalisation, un premier jeu axial est prévu entre ladite première série de tenons et ladite troisième série de tenons, et un deuxième jeu axial est prévu entre ladite deuxième série de tenons et ladite quatrième série de tenons.
De préférence, lesdits premier et deuxième jeux sont compris entre 0,5 et 30 mm.

De plus, l'invention concerne une colonne montante comprenant au moins deux tronçons de colonne montante assemblés par un connecteur selon l'une des caractéristiques précédentes.

En outre, l'invention concerne un procédé d'assemblage de deux tronçons de colonne montante au moyen d'un connecteur selon l'une des caractéristiques précédentes. Pour ce procédé, on réalise les étapes suivantes :
a) on met en position ladite bague de verrouillage autour dudit premier élément connecteur ;
b) on monte le premier moyen de retenue pour maintenir ladite bague de verrouillage par rapport audit premier élément connecteur ;
c) on dispose bout à bout le premier et le deuxième élément connecteur en mettant en position ladite bague de verrouillage autour dudit deuxième élément connecteur pourvu d'un deuxième moyen de retenue, de sorte que le deuxième moyen de retenue coopère avec ladite bague de verrouillage ; et
d) on verrouille ladite bague de verrouillage par rotation.
Avantageusement, les étapes de mise en position sont mises en oeuvre par translation relative de ladite bague de verrouillage par rapport auxdits éléments connecteurs.

L'invention concerne également un procédé de désassemblage de deux tronçons de colonne montante au moyen d'un connecteur selon l'une des caractéristiques précédentes. Pour ce procédé, on réalise les étapes suivantes :
a) on déverrouille ladite bague de verrouillage par rotation ;
b) on libère ledit deuxième élément connecteur de ladite bague de verrouillage ;
c) on démonte ledit premier moyen de retenue ; et
d) on libère ledit premier élément connecteur de ladite bague de verrouillage.
Avantageusement, les étapes de libération sont mises en œuvre par translation relative sur des éléments connecteurs par rapport à ladite bague de verrouillage.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 schématise une colonne montante selon l'invention.
La figure 2 illustre un connecteur avant assemblage selon un premier mode de réalisation de l'invention.
La figure 3 est une vue en coupe d'un connecteur assemblé selon un premier mode de réalisation de l'invention.
Les figures 4 et 5 illustrent deux éléments connecteurs selon un premier mode de réalisation de l'invention.
La figure 6 illustre une bague de verrouillage selon un premier mode de réalisation de l'invention.
Les figures 7a à 7d illustrent quatre étapes du procédé d'assemblage d'un connecteur selon un premier mode de réalisation de l'invention.
La figure 8 illustre un connecteur assemblé selon un deuxième mode de réalisation de l'invention.
La figure 9 illustre un connecteur avant assemblage selon le deuxième mode de réalisation de l'invention.

### Description détaillée de l'invention

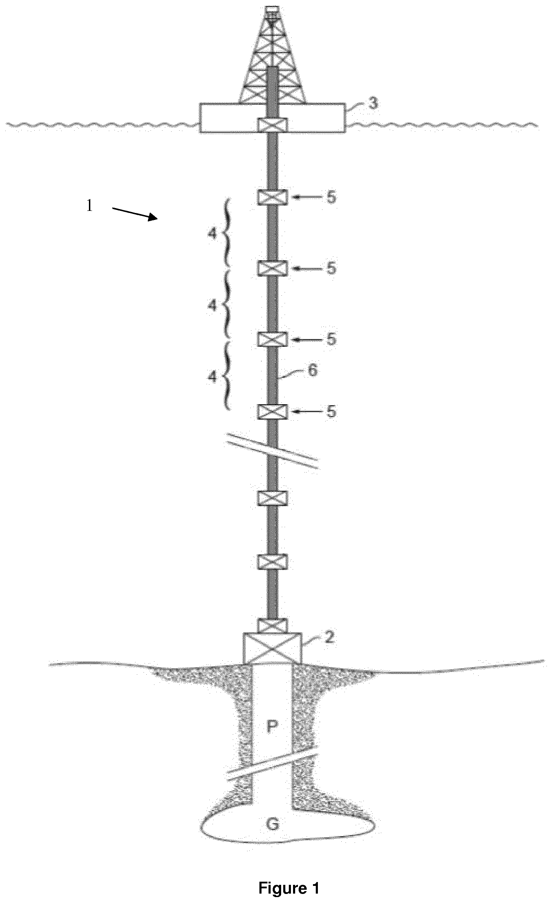

Selon un exemple de réalisation non limitatif, la figure 1 schématise une colonne montante 1 de workover (reconditionnement) installée en mer. La colonne montante 1 prolonge le puits P jusqu'à un réservoir G et s'étend depuis la tête de puits 2 jusqu'à un support flottant 3, par exemple une plateforme ou un bateau. Selon l'exemple illustré, la tête de puits 2 peut être munie d'obturateur couramment nommé "B.O.P." ou "Blow Out Preventer". Alternativement, l'obturateur B.O.P. peut être situé au niveau du support flottant. La colonne montante 1 est constituée par l'assemblage de plusieurs tronçons 4 assemblés bout à bout par des connecteurs 5. Chaque tronçon est composé d'un élément tubulaire 6.

Le connecteur selon l'invention est adapté à une colonne montante de reconditionnement, par exemple telle que décrite en relation avec la figure 1, mais le connecteur selon l'invention peut également être adapté à une colonne montante de conditionnement (de l'anglais « completion »), ou de production. Selon l'invention, le connecteur comprend :
- un premier tronçon de colonne montante, de forme sensiblement tubulaire, prolongé par un premier élément connecteur, le premier élément connecteur est pourvu d'une première série de tenons sur sa surface extérieure, le premier élément connecteur peut avoir de préférence un diamètre interne sensiblement identique au diamètre interne du premier tronçon de colonne montante,
- un deuxième tronçon de colonne montante, de forme sensiblement tubulaire, prolongé par un deuxième élément connecteur, le deuxième élément connecteur est pourvu d'une deuxième série de tenons sur sa surface extérieure, le deuxième élément connecteur peut avoir de préférence un diamètre interne sensiblement identique au diamètre interne du deuxième tronçon de colonne montante,
- une bague de verrouillage, située à l'extérieur des premier et deuxième éléments connecteurs, la bague de verrouillage assemblant les deux éléments connecteurs, la bague de verrouillage comprenant, sur sa face intérieure, une troisième série et une quatrième série de tenons aptes à coopérer avec la première série et la deuxième série de tenons, et
- des moyens de retenue de la bague de verrouillage par rapport aux deux éléments connecteurs, ces moyens de retenue permettent le maintien et le guidage de la bague de verrouillage, en d'autres termes la bague de verrouillage assure l'alignement des deux éléments connecteurs au moyen des moyens de retenue, en particulier lors de l'assemblage du connecteur. Les moyens de retenue sont au moins partiellement démontables. Les moyens de retenue sont, de préférence, disposés de part et d'autre, aux deux extrémités de la bague de verrouillage. Ainsi, il est possible de minimiser le diamètre extérieur du connecteur, ce qui limite son encombrement. De plus, cet agencement des moyens de retenue permet que, une fois verrouillée, les parties sensibles du connecteur (par exemple les tenons) sont protégées de l'extérieur.

Ainsi, grâce aux quatre séries de tenons, deux connexions de type à baïonnette sont formées : une première connexion entre la bague de verrouillage et le premier élément connecteur, une deuxième connexion entre la bague de verrouillage et le deuxième élément connecteur. De cette manière, et grâce au caractère démontable des moyens de retenue, la bague de verrouillage est rendue démontable par rapport aux éléments connecteurs mâle et femelle, ce qui permet son inspection et sa maintenance.
Le connecteur peut être conçu et dimensionné pour satisfaire les spécifications en vigueur, notamment mentionnées par les normes API RP 17G et ISO 13628-7 éditées respectivement par l'American Petroleum Institute (Institut Américain du Pétrole) et l'organisation internationale de normalisation.

Les différents modes de réalisation décrits précédemment et ci-après peuvent être combinés, de manière à combiner leurs effets.

Selon un mode de réalisation de l'invention, le connecteur peut comprendre en outre un manchon d'étanchéité. Le manchon d'étanchéité permet d'assurer l'étanchéité de l'assemblage des deux tronçons de colonne montante. Ce manchon d'étanchéité peut être emmanché (c'est-à-dire monté à l'intérieur) dans les deux éléments connecteurs. Il peut comporter des joints d'étanchéité sur sa surface extérieure. De préférence, il est fixé dans un des deux éléments connecteurs. Cette fixation peut être réalisée notamment par frettage, soudage, au moyen de « circlips » (anneaux de retenue), collage, vissage, filetage ou toute méthode analogue. Le manchon d'étanchéité peut avoir une forme sensiblement tubulaire, et peut comprendre une pluralité de rainures sur sa surface extérieure pour l'insertion d'une pluralité de joints d'étanchéité. Les joints d'étanchéité viennent en contact avec la surface intérieure des éléments connecteurs. Le manchon d'étanchéité peut, avantageusement avoir un diamètre intérieur sensiblement identique au diamètre intérieur des éléments connecteurs.
Dans le cas où le connecteur comporte deux moyens de retenue et une manchon d'étanchéité, la connexion est réalisée avec un assemblage en trois points, ce qui facilite la connexion.

Selon un mode de réalisation de l'invention, le premier élément connecteur peut comporter, en son extrémité (qui se trouve au centre de la bague de verrouillage), au moins un créneau s'engageant dans au moins un creux situé à l'extrémité (qui se trouve au centre de la bague de verrouillage) du deuxième élément connecteur. Le créneau et le creux peuvent être formés dans la direction axiale des éléments connecteurs. Selon un exemple de réalisation, le premier élément connecteur peut comprendre entre deux et six créneaux, de préférence quatre, et le deuxième élément connecteur peut comprendre entre deux et six creux, de préférence quatre creux. Ce(s) créneau(x) et ce(s) creux permettent de faciliter la connexion assurant un blocage en rotation selon l'axe de la colonne montante, des deux éléments connecteurs.

Conformément à une conception, les moyens de retenue ont un diamètre extérieur sensiblement identique au diamètre extérieur de la bague de verrouillage. Ainsi, l'encombrement radial du connecteur est limité.
Selon une mise en œuvre, les moyens de retenue comportent des moyens de maintien de la bague de verrouillage à une première extrémité de la bague de verrouillage, et des moyens de guidage de la bague de verrouillage à la deuxième extrémité de la bague de verrouillage. Les moyens de maintien permettent de maintenir (positionner) la bague de verrouillage par rapport au premier élément connecteur lors de la connexion et du verrouillage du connecteur. Les moyens de guidage permettent de guider le deuxième élément connecteur lors de la connexion et du verrouillage, notamment en facilitant l'alignement des différents éléments. Dans ce but, les moyens de guidage comportent au moins une surface axiale (sensiblement de forme cylindrique) destinée à être en contact avec la surface extérieure de la bague de verrouillage.
Alternativement, le connecteur peut comprendre un seul moyen de retenue, à une extrémité de la bague de verrouillage.
Selon un premier mode de réalisation de l'invention des moyens de retenue, les moyens de retenue sont rendus démontables en étant formé en plusieurs parties assemblées. L'assemblage de deux parties peut être notamment réalisé par vissage. Avantageusement, chaque moyen de retenue est formé de deux demi-anneaux, appelés aussi demi-coquilles, aptes à être assemblés. Les deux demi-anneaux peuvent être fomés par un anneau coupé en deux parties selon un diamètre de l'anneau. Une fois assemblées, les deux demi-anneaux forment sensiblement un tube. Cette conception permet une connexion rapide. Alternativement, chaque moyen de retenue peut être formé de plus de deux parties, de manière à former sensiblement un tube une fois assemblées.
Selon une conception, chaque moyen de retenue peut être monté dans une gorge d'un élément connecteur. Ainsi, une fois montés, les moyens de retenue sont immobiles, et les déplacements axiaux des moyens de retenue sont évités, ce qui permet une retenue optimale de la bague de verrouillage par rapport aux éléments connecteurs.
Pour ce mode de réalisation, les moyens de maintien, formés par exemple par deux demi-anneaux, peuvent avantageusement comprendre :
- au moins un épaulement axial formant une butée axiale selon une première direction,
- au moins une saillie, de préférence une saillie radiale orientée vers l'intérieur des moyens de maintien, qui coopère avec la bague de verrouillage, en particulier avec une rainure formée dans la bague de verrouillage. La saillie peut être une saillie circonférentielle. De préférence, il existe un jeu entre la saillie et la rainure, de manière à permettre un mouvement relatif de rotation de la bague de verrouillage par rapport aux moyens de maintien.
En vue en coupe axiale, les moyens de maintien peuvent avoir sensiblement une forme de J, le grand côté du J étant destiné à être placé dans la gorge du premier élément connecteur, et le petit côté du J servant de saillie étant destiné à coopérer avec une rainure de la bague de verrouillage.

Pour ce mode de réalisation, les moyens de guidage, formés par exemple de deux demi-anneaux, peuvent avantageusement comprendre :
- au moins un épaulement axial formant une butée axiale selon une deuxième direction, opposée à la première direction. Un jeu peut être prévu entre la bague de verrouillage et les moyens de guidage de manière à permettre un mouvement relatif de rotation de la bague de verrouillage par rapport aux moyens de guidage.
En vue en coupe axiale, les moyens de guidage peuvent avoir sensiblement une forme de L, le grand côté du L étant destiné à être placé dans la gorge du deuxième élément connecteur, et le petit côté du L étant destiné à coopérer avec la bague de verrouillage.
Afin de faciliter la coopération entre les moyens de retenue et la bague de verrouillage, les extrémités de la bague de verrouillage peuvent être formées pour coopérer avec les moyens de retenue. Par exemple les deux extrémités de la bague de verrouillage peuvent comporter un épaulement, et une des deux extrémités de la bague de verrouillage peut comporter une rainure pour la coopération avec une saillie.

Selon un deuxième mode de réalisation des moyens de retenue, les moyens de retenue peuvent être monobloc avec les éléments connecteurs : chaque élément connecteur comporte un moyen de retenue. Les moyens de retenue peuvent être réalisés simultanément à l'élément connecteur, par exemple par forgeage ou par usinage.
Pour ce mode de réalisation, les moyens de maintien peuvent avantageusement comprendre :
- au moins un épaulement axial formé par un élargissement du diamètre du premier élément connecteur, l'épaulement axial formant une butée axiale selon une première direction,
- au moins un pion démontable, apte à être inséré dans le moyen de maintien et la bague de verrouillage, ce pion est de préférence en saillie radialement orientée vers l'intérieur des moyens de maintien, et coopère avec la bague de verrouillage, en particulier avec une rainure formée dans la bague de verrouillage. Le pion peut avoir sensiblement une forme cylindrique. De préférence, il existe un jeu entre le pion et la rainure, de manière à permettre un mouvement relatif de rotation de la bague de verrouillage par rapport aux moyens de maintien.
En vue en coupe, les moyens de maintien peuvent avoir sensiblement une forme de L, le grand côté du L étant un élargissement du diamètre du premier élément connecteur, et le petit côté du L étant destiné à coopérer avec la bague de verrouillage. Le petit côté du L comporte au moins un orifice pour l'insertion du pion démontable.
Pour ce mode de réalisation, les moyens de maintien peuvent comprendre entre un et huit pions, de préférence quatre ou six pions démontables.
Les moyens de guidage peuvent avantageusement comprendre :
- au moins un épaulement axial formé par un élargissement du diamètre du deuxième élément connecteur, formant une butée axiale selon une deuxième direction, opposée à la première direction. Un jeu peut être prévu entre la bague de verrouillage et les moyens de guidage de manière à permettre un mouvement relatif de rotation de la bague de verrouillage par rapport aux moyens de guidage.
En vue en coupe, les moyens de guidage peuvent avoir sensiblement une forme de L, le grand côté du L étant un élargissement du diamètre du deuxième élément connecteur, et le petit côté du L étant destiné à coopérer avec la bague de verrouillage.
Afin de faciliter la coopération entre les moyens de retenue et la bague de verrouillage, les extrémités de la bague de verrouillage peuvent être formées pour coopérer avec les moyens de retenue. Par exemple, les deux extrémités de la bague de verrouillage peuvent comporter un épaulement, et une des deux extrémités de la bague de verrouillage peut comporter une rainure pour la coopération avec le ou les pion(s) démontable(s).

Selon un troisième mode de réalisation des moyens de retenue, on peut réaliser à une première extrémité un moyen de retenue selon le premier mode de réalisation (moyen de retenue formé de deux demi-coquilles), et à la deuxième extrémité un moyen de retenue selon le deuxième mode de réalisation (moyen de retenue monobloc avec l'élément connecteur).

De préférence, la bague de verrouillage est réalisée en une seule pièce.

Selon un mode de réalisation de l'invention, les tenons des première et deuxième séries de tenons (et a fortiori des troisième et quatrième séries de tenons) sont en saillie sur des plages angulaires identiques. On appelle plage angulaire d'un tenon, l'angle formé par la portion de disque occupée par le tenon sur le diamètre dans lequel il est inscrit. Par exemple, si une série de tenons comporte des tenons qui représentent chacun un sixième de disque, alors la plage angulaire du tenon est de 60°. Ainsi, grâce à cette conception, le verrouillage et le déverrouillage de la bague de verrouillage par rapport aux deux éléments connecteurs peuvent résulter d'une seule rotation et devient simultané. De cette manière, la bague de verrouillage n'est entraînée en rotation qu'entre seulement deux positions angulaires.
Selon une première mise en œuvre de l'invention, les répartitions circonférentielles des troisième et quatrième séries de tenons sont symétriques par rapport à un plan radial passant entre les deux séries de tenons. En d'autres termes, les tenons des troisième et quatrième séries de tenons se font face (sont alignés). Ainsi, la bague de verrouillage peut avoir un plan de symétrie, ce qui peut faciliter sa conception. Selon une deuxième mise en œuvre de l'invention, les répartitions circonférentielles des troisième et quatrième séries de tenons sont opposées : la répartition circonférentielle de la quatrième série de tenons est décalée par rapport à la troisième série de tenons, d'un angle correspondant à la plage angulaire d'un tenon. En d'autres termes, les tenons d'une série font face aux intervalles de l'autre série. Selon une troisième mise en œuvre de l'invention, les répartitions circonférentielles des tenons des troisième et quatrième séries sont décalées l'une par rapport à l'autre d'un angle correspondant à la moitié de la plage angulaire d'un tenon (ou tout autre angle).
Alternativement, les tenons des première et deuxième séries de tenons (et a fortiori des troisième et quatrième séries de tenons) sont en saillie sur des plages angulaires différentes. Ainsi le déverrouillage des deux connexions à baïonnette est réalisé par des rotations distinctes.
Selon un mode de réalisation de l'invention, chaque série de tenons peut comporter au moins une rangée de tenons. On appelle rangée de tenons une répartition circonférentielle des tenons. Dans chaque rangée de tenons, il existe une alternance de tenons en saillie et d'espaces vides (intervalles), ces espaces vides permettent le passage des tenons correspondant de la série de tenons avec laquelle la rangée de tenons coopère. Conformément à une mise en œuvre de l'invention, les séries de tenons peuvent comprendre une pluralité de rangées de tenons, en particulier deux ou trois rangées de tenons. La pluralité de rangées de tenons permet une diminution des efforts axiaux sur les tenons, ce qui permet de limiter la fatigue mécanique des tenons.
Selon une conception possible, chaque série de tenons comporte une seule rangée de tenons. Selon une première alternative, chaque série de tenons comporte deux rangées de tenons. Selon une deuxième alternative, chaque série de tenons comporte trois rangées de tenons. Selon une troisième alternative, deux des quatre séries de tenons comportent une rangée de tenons, et les deux autres séries comportent deux rangées de tenons. Selon une quatrième alternative, deux des quatre séries de tenons comportent deux rangées de tenons, et les deux autres séries comportent trois rangées de tenons.
Dans le cas où une série de tenons comporte plusieurs rangées de tenons, alors les rangées de tenons peuvent être inscrites dans des diamètres différents. Cette conception permet de faire passer la rangée de tenons de plus faible diamètre, et ainsi, il est possible de verrouiller et déverrouiller la connexion à baïonnette par une seule rotation.
Dans le cas où une série de tenons comporte plusieurs rangées de tenons, alors les rangées de tenons peuvent être inscrites dans des diamètres identiques. Cette conception, lorsque les séries de tenons sont alignés permet de verrouiller et déverrouiller la connexion à baïonnette par une seule rotation. Cette conception (plusieurs rangées de tenons inscrits dans des diamètres identiques), lorsque les séries de tenons ne sont pas alignées, peut imposer une insertion et un verrouillage de la connexion à baïonnette par un mouvement relatif composé d'une première translation, une première rotation, une deuxième translation et une deuxième rotation. Cette conception permet donc une meilleure sécurisation de la connexion car elle permet d'éviter une déconnexion non souhaitée.
Chaque rangée de tenons comporte une pluralité de tenons répartis régulièrement sur un diamètre. De manière avantageuse, les tenons des différentes rangées peuvent être agencés pour permettre un verrouillage sur 360°. Selon une conception, les rangées de tenons peuvent comprendre trois tenons ayant une plage angulaire de 60°, ou 40°. Selon une alternative, les rangées de tenons peuvent comprendre quatre tenons ayant une plage angulaire de 45°, ou 30°. Selon une alternative, les rangées de tenons peuvent comprendre cinq tenons ayant une plage angulaire de 36°, ou 24°. Selon une autre alternative, les rangées de tenons peuvent comprendre six tenons ayant une plage angulaire de 30°, ou 20°. Selon une alternative, les rangées de tenons peuvent comprendre huit tenons ayant une plage angulaire de 22,5°, ou 15°. De manière à avoir les tenons en saillie sur des plages angulaires identiques, toutes les rangées de toutes les séries de tenons peuvent comporter le même nombre de tenons.
Selon un exemple de réalisation, les quatre séries de tenons comportent chacune deux rangées de quatre tenons ayant une plage angulaire de 45°. Les rangées de tenons étant alignées et inscrites dans des diamètres identiques. Ainsi, le verrouillage du connecteur peut être réalisé par une unique rotation de 45°.

Afin de faciliter le montage et d'éviter des problèmes de blocage des tenons en cas d'usure, au moins un jeu axial peut être réalisé entre un élément connecteur et la bague de verrouillage. Le jeu axial est de préférence strictement positif.

Selon un mode de réalisation de l'invention, un jeu axial positif est réalisé entre chaque élément connecteur et la bague de verrouillage. Ainsi, les problèmes liés à l'usure des tenons peuvent être évités, ce qui facilite la manipulation de la bague de verrouillage. Les deux jeux axiaux peuvent être identiques ou distincts. Les jeux axiaux se répartissent dans le connecteur au fur et à mesure des étapes de montage, verrouillage, déverrouillage, mise sous tension du connecteur. Par exemple, lors du montage, un jeu axial peut exister entre les tenons coopérant entre eux, et une fois le connecteur verrouillé et sous tension, un jeu axial peut exister entre les extrémités des deux éléments connecteurs.
Chaque jeu axial, strictement positif, peut être compris entre 0,5 et 30 mm, et de préférence entre 0,5 et 10 mm. Au-delà de 30 mm, l'effet technique relatif à l'évitement des problèmes de blocage reste présent, toutefois, l'encombrement augmente.

En outre, conformément à une conception du connecteur, la bague de verrouillage peut comporter des moyens de limitation de la rotation de la bague de verrouillage, par exemple des butées, ces moyens limitant une rotation de la bague de verrouillage pour un angle égal à la plage angulaire des tenons.

De plus, selon une caractéristique de l'invention, le connecteur peut comprendre des moyens de blocage de la bague de verrouillage dans au moins une position, notamment dans la position verrouillée. Ces moyens peuvent permettre également d'empêcher la rotation de la bague de verrouillage par rapport au premier élément connecteur dans la position déverrouillée. Les moyens de blocage de la bague de verrouillage permettent d'éviter tout déverrouillage non désiré de la bague de verrouillage.

Conformément à une conception de l'invention, la bague de verrouillage peut comprendre des moyens de manipulation qui sont externes à la bague de verrouillage. Ces moyens de manipulation permettent de faire tourner la bague de verrouillage. Par exemple, les moyens de manipulation peuvent être une barre de manipulation.

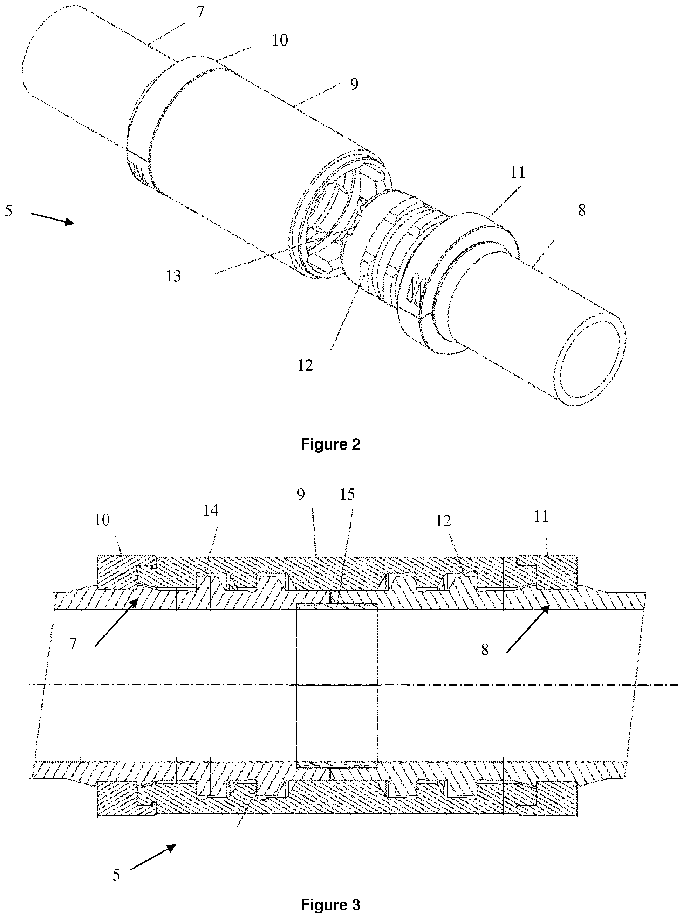

Les figures 2 à 6 illustrent un connecteur selon un premier mode de réalisation de l'invention. La figure 2 illustre, de manière schématique et non limitative, un connecteur selon un premier mode de réalisation de l'invention, avant connexion avec le deuxième élément connecteur. Le connecteur 5 comporte un premier élément connecteur 7, qui prolonge un premier tronçon de colonne (non représenté). Le premier élément connecteur 7 est muni d'une première série de tenons (non représentée). Le connecteur 5 comporte un deuxième élément connecteur 8, qui prolonge un deuxième tronçon de colonne (non représenté). Le deuxième élément connecteur 8 est muni d'une deuxième série de tenons 12. Telle que représentée (de manière non limitative), la deuxième série de tenons comporte deux rangées de quatre tenons. De plus, le deuxième élément connecteur 8 comporte un creux 13 destiné à coopérer avec un créneau du premier élément connecteur 7. En outre, le connecteur 5 comporte une bague de verrouillage 9. La bague de verrouillage 9 comporte une troisième et une quatrième séries de tenons aptes à coopérer respectivement avec les première et deuxième séries de tenons, des premier et deuxième éléments connecteurs 7 et 8. Par ailleurs, le connecteur 5 comporte des moyens de retenue 10, 11 de la bague de verrouillage 9, les moyens de retenue 10 et 11 sont placés aux deux extrémités de la bague de verrouillage 9. Les moyens de retenue 10 et 11 comportent un moyen de maintien 10 de la bague verrouillage 9 sur le premier élément connecteur 7, et un moyen de guidage 11 sur le deuxième élément connecteur 8. Chaque moyen de retenue 10 et 11 est formé de deux demi-coquilles assemblées.
La figure 3 illustre, de manière schématique et non limitative, le connecteur de la figure 2, selon une vue en coupe, une fois le connecteur assemblé. Le connecteur 5 comporte un premier élément connecteur 7, qui prolonge un premier tronçon de colonne (non représenté). Le premier élément connecteur 7 est muni d'une première série de tenons 14 sur sa surface extérieure. Le connecteur 5 comporte un deuxième élément connecteur 8, qui prolonge un deuxième tronçon de colonne (non représenté). Le deuxième élément connecteur 8 est muni d'une deuxième série de tenons 12 sur sa surface extérieure. Telles que représentées (de manière non limitative), la première 14 et la deuxième 12 séries de tenons comportent deux rangées de quatre tenons. En outre, le connecteur 5 comporte une bague de verrouillage 9. La bague de verrouillage 9 comporte une troisième et une quatrième séries de tenons aptes à coopérer respectivement avec les première 14 et deuxième 12 séries de tenons, des premier et deuxième éléments connecteurs 7 et 8. Les troisième et quatrième séries de tenons sont disposés sur la surface intérieure de la bague de verrouillage 9. Par ailleurs, le connecteur 5 comporte des moyens de retenue 10, 11 de la bague de verrouillage 9, les moyens de retenue 10 et 11 sont placés aux deux extrémités de la bague de verrouillage 9, dans des gorges formées dans les éléments connecteurs 7 et 8. Les moyens de retenue comportent un moyen de maintien 10 de la bague verrouillage 9 sur le premier élément connecteur 7, et un moyen de guidage 11 sur le deuxième élément connecteur 8. Tel que représenté, le moyen de maintien 10 a sensiblement une forme en J, avec une saillie circonférentielle qui coopère avec une rainure réalisée dans la surface extérieure de la bague de verrouillage 9. Tel que représenté, le moyen de guidage 11 a sensiblement une forme en L avec un épaulement qui coopère avec une extrémité de la bague de verrouillage 9. Chaque moyen de retenue 10 et 11 est formé de deux demi-coquilles assemblées. De plus, le connecteur 5, comporte un manchon d'étanchéité 15. Le manchon d'étanchéité 15 est emmanché dans les deux éléments connecteurs 7 et 8. Le manchon d'étanchéité 15 est sensiblement tubulaire, et comporte des rainures pour l'insertion de joints d'étanchéité.

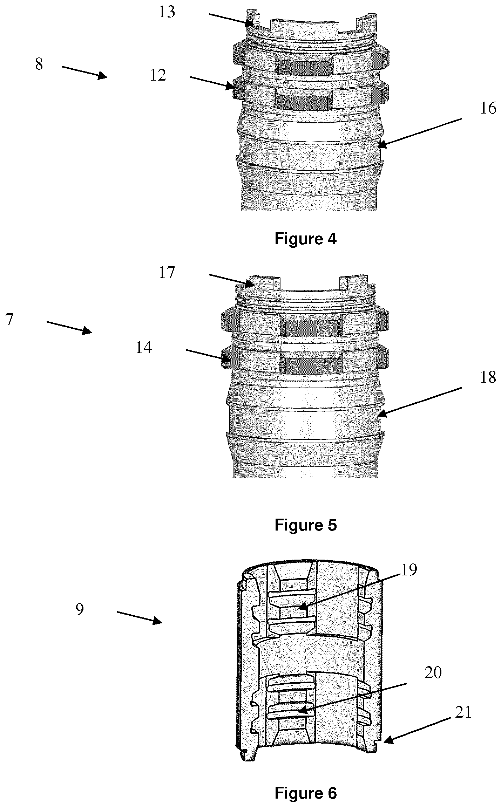

La figure 4 illustre, de manière schématique et non limitative, un deuxième élément connecteur 8 pour le mode de réalisation des figures 2 et 3. Le deuxième élément connecteur 8 comporte sur sa surface extérieure une série de tenons 12, comprenant deux rangées de quatre tenons, les tenons étant alignés et inscrits dans des diamètres identiques. L'extrémité de l'élément connecteur 8 comporte des creux 13 (par exemple quatre creux), aptes à coopérer avec des créneaux du premier élément connecteur. De plus, le deuxième élément connecteur 8 comporte une gorge 16 apte à recevoir un moyen de retenue, par exemple un moyen de guidage.
La figure 5 illustre, de manière schématique et non limitative, un premier élément connecteur 7 pour le mode de réalisation des figures 2 et 3. Le premier élément connecteur 7 comporte sur sa surface extérieure une série de tenons 14, comprenant deux rangées de quatre tenons, les tenons étant alignés et inscrits dans des diamètres identiques. L'extrémité de l'élément connecteur 7 comporte des créneaux 17 (par exemple quatre créneaux), aptes à coopérer avec des creux du deuxième élément connecteur. De plus, le premier élément connecteur 7 comporte une gorge 18 apte à recevoir un moyen de retenue, par exemple un moyen de maintien.
La figure 6 illustre, de manière schématique et non limitative, une bague de verrouillage 9 pour le mode de réalisation des figures 2 et 3. La bague de verrouillage 9 comporte, sur sa surface intérieure, deux séries de tenons 19 et 20. Chaque série de tenons comporte deux rangées de quatre tenons, les tenons étant alignés, et inscrits dans des diamètres identiques. La série de tenons 19 est apte à coopérer avec la série de tenons du premier élément connecteur, et la série de tenons 20 est apte à coopérer avec la série de tenons du deuxième élément connecteur. Telle que représentée, la bague de verrouillage 9 comporte une rainure 21 apte à recevoir une saillie d'un moyen de retenue.

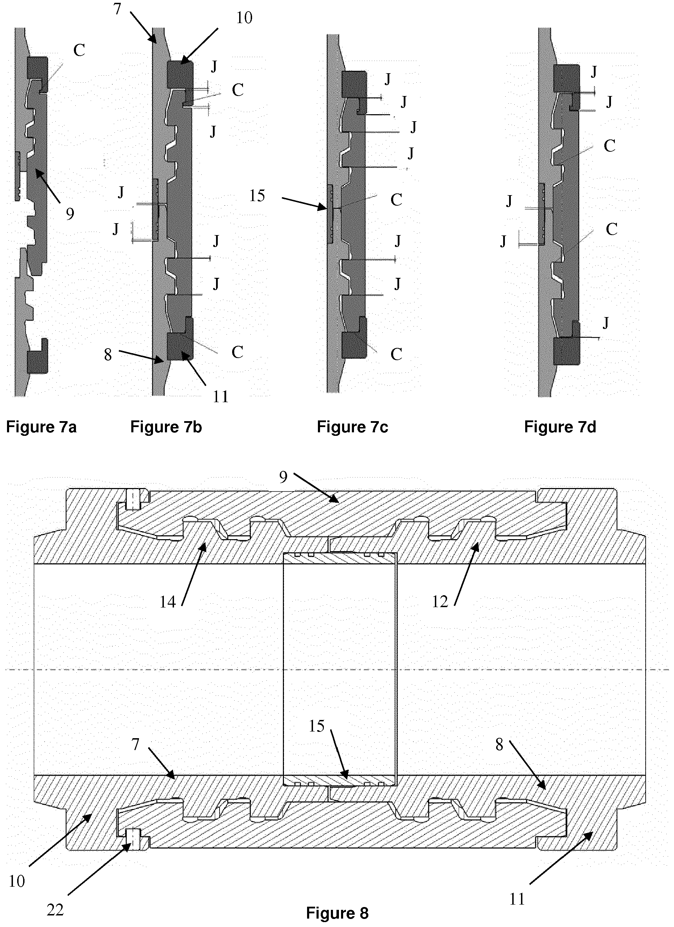

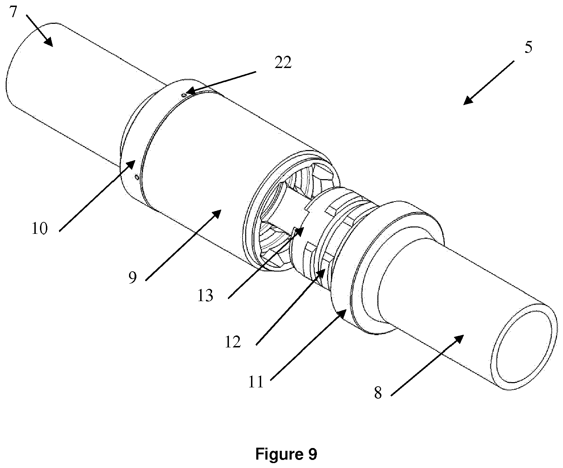

Les figures 8 et 9 illustrent un connecteur selon un deuxième mode de réalisation de l'invention. Pour ce deuxième mode de réalisation la bague de verrouillage peut être sensiblement identique à celle illustrée à la figure 6.
La figure 8 illustre, de manière schématique et non limitative, le connecteur, selon une vue en coupe, une fois le connecteur assemblé. Le connecteur 5 comporte un premier élément connecteur 7, qui prolonge un premier tronçon de colonne (non représenté). Le premier élément connecteur 7 est muni d'une première série de tenons 14 sur sa surface extérieure. Le connecteur 5 comporte un deuxième élément connecteur 8, qui prolonge un deuxième tronçon de colonne (non représenté). Le deuxième élément connecteur 8 est muni d'une deuxième série de tenons 12 sur sa surface extérieure. Telles que représentées (de manière non limitative), la première 14 et la deuxième 12 séries de tenons comportent deux rangées de quatre tenons. En outre, le connecteur 5 comporte une bague de verrouillage 9. La bague de verrouillage 9 comporte une troisième et une quatrième séries de tenons aptes à coopérer respectivement avec les première 14 et deuxième 12 séries de tenons, des premier et deuxième éléments connecteurs 7 et 8. Les troisième et quatrième séries de tenons sont disposées sur la surface intérieure de la bague de verrouillage 9. Par ailleurs, le connecteur 5 comporte des moyens de retenue 10, 11 de la bague de verrouillage 9, les moyens de retenue 10 et 11 sont placés aux deux extrémités de la bague de verrouillage 9,. Les moyens de retenue comportent un moyen de maintien 10 de la bague verrouillage 9 intégré dans le premier élément connecteur 7, et un moyen de guidage 11 intégré dans le deuxième élément connecteur 8. Tel que représenté, le moyen de maintien 10 a sensiblement une forme en L, avec un orifice pour le passage d'au moins un pion démontable 22, qui coopère avec une rainure réalisée dans la surface extérieure de la bague de verrouillage 9. Tel que représenté, le moyen de guidage 11 a sensiblement une forme en L avec un épaulement qui coopère avec une extrémité de la bague de verrouillage 9. De plus, le connecteur 5, comporte un manchon d'étanchéité 15. Le manchon d'étanchéité 15 est emmanché dans les deux éléments connecteurs 7 et 8. Le manchon d'étanchéité 15 est sensiblement tubulaire, et comporte des rainures pour l'insertion de joints d'étanchéité.
La figure 9 illustre, de manière schématique et non limitative, un connecteur selon le mode de réalisation de l'invention de la figure 8, avant connexion avec le deuxième élément connecteur. Le connecteur 5 comporte un premier élément connecteur 7, qui prolonge un premier tronçon de colonne (non représenté). Le premier élément connecteur 7 est muni d'une première série de tenons (non représentée). Le connecteur 5 comporte un deuxième élément connecteur 8, qui prolonge un deuxième tronçon de colonne (non représenté). Le deuxième élément connecteur 8 est muni d'une deuxième série de tenons 12. Telle que représentée (de manière non limitative), la deuxième série de tenons comporte deux rangées de quatre tenons. De plus, le deuxième élément connecteur 8 comporte un creux 13 destiné à coopérer avec un créneau du premier élément connecteur 7. En outre, le connecteur 5 comporte une bague de verrouillage 9. La bague de verrouillage 9 comporte une troisième et une quatrième séries de tenons aptes à coopérer respectivement avec les première et deuxième séries de tenons, des premier et deuxième éléments connecteurs 7 et 8. Par ailleurs, le connecteur 5 comporte des moyens de retenue 10, 11 de la bague de verrouillage 9, les moyens de retenue 10 et 11 sont placés aux deux extrémités de la bague de verrouillage 9. Les moyens de retenue 10 et 11 comportent un moyen de maintien 10 de la bague verrouillage 9 intégré dans le premier élément connecteur 7, et un moyen de guidage 11 intégré dans le deuxième élément connecteur 8. Des pions 22 sont prévus entre le moyen de maintien 10 et la bague de verrouillage 9.
De plus, la présente invention concerne une colonne montante, comprenant au moins deux tronçons de colonne montante assemblés par un connecteur tel que décrit précédemment. Le connecteur peut être réalisé selon l'une quelconque des combinaisons des modes de réalisation précédemment décrits : présence de manchon d'étanchéité, conception des moyens de retenue, pluralité de rangées de tenons, rangées de tenons inscrits sur des diamètres identiques ou distincts, séries de tenons alignées ou non, jeux axiaux...

En outre, la présente invention concerne l'utilisation d'une telle colonne montante (avec l'une quelconque des combinaisons de modes de réalisation précédemment décrits) pour produire un effluent pétrolier en mer, pour une opération de conditonnement (« completion »), de reconditionnement (« work-over »), etc.

Par ailleurs, la présente invention concerne un procédé d'assemblage de deux tronçons de colonne au moyen d'un connecteur selon l'invention (avec l'une quelconque des combinaisons de modes de réalisation précédemment décrits). Pour ce procédé, on peut mettre en œuvre les étapes suivantes :
a) on met en position la bague de verrouillage autour du premier élément connecteur, ainsi le premier tronçon de colonne montante est positionné dans la bague de verrouillage sans être verrouillé ;
b) on monte un premier moyen de retenue (de préférence un moyen de maintien) sur le premier élément connecteur pour maintenir la bague de verrouillage par rapport au premier élément connecteur, ainsi la bague de verrouillage ne peut pas avoir de mouvement de translation par rapport au premier élément connecteur ;
c) on dispose bout à bout le premier et le deuxième élément connecteur en mettant en position la bague de verrouillage autour dudeuxième élément connecteur pourvu du deuxième moyen de retenue (de préférence un moyen de guidage), ainsi le deuxième tronçon de colonne montante est positionné dans la bague de verrouillage sans être verrouillé ; et
d) on verrouille la bague de verrouillage, par rotation de la bague de verrouillage, de préférence au moyen d'une rotation unique (cas de tenons ayant la même plage angulaire), qui verrouille les deux éléments connecteurs qui n'ont plus de mouvements relatifs par rapport à la bague de verrouillage.
Pour l'étape d), lors du verrouillage, la rotation de la bague engendre la coopération respective des première et troisième séries de tenons, et des deuxième et quatrième séries de tenons. La rotation permettant le verrouillage simultané des deux connexions de type à baïonnette est une rotation d'un angle correspondant à la plage angulaire des tenons. Par exemple si les tenons ont une plage angulaire de 36°, alors la rotation de verrouillage est une rotation de 36°.
Pour l'étape b), le montage du premier moyen de retenue peut être mis en œuvre par assemblage de deux demi-coquilles, au sein d'une gorge formée dans le premier élément connecteur. Le moyen de retenue peut avoir une saillie qui coopère avec une rainure dans la bague de verrouillage.
De la même manière, le montage du deuxième moyen de retenue peut être mis en œuvre par l'assemblage de deux demi-coquilles au sein d'une gorge formée dans le deuxième élément connecteur. Le moyen de retenue peut avoir un épaulement qui coopère avec l'extrémité de la bague de verrouillage. Le montage du deuxième moyen de retenue sur le deuxième élément connecteur peut être réalisé préalablement ou simultanément à l'une des étapes a) ou b), ou entre les étapes b) et c).
Les étapes de mise en position consistent à mettre en place la bague de verrouillage par rapport l'élément connecteur concerné, de manière à ce qu'une seule rotation subséquente puisse permettre le verrouillage du connecteur.
Dans certains cas, les étapes d'insertion correspondent à un seul mouvement de translation relative de la bague par rapport à l'élément connecteur. C'est le cas par exemple, lorsque la série de tenons concernée ne comprend qu'une rangée de tenons, ou lorsque la série de tenons concernée comporte une pluralité de rangées de tenons inscrits dans des diamètres différents, ou lorsque les tenons sont alignés. Cette translation permet de mettre en position les tenons pour le blocage de la connexion à baïonnette.
Dans d'autres cas, les étapes d'insertion correspondent à un mouvement combiné comprenant une première étape de translation, suivie d'une première rotation et suivie d'une deuxième translation. Il s'agit de mouvements relatifs entre la bague de verrouillage et l'élément connecteur concerné. C'est par exemple le cas, lorsque la série de tenons concernée comprend une pluralité de rangées de tenons inscrits dans des diamètres identiques et de plages angulaires décalés. Les deux premiers mouvements relatifs permettent de faire passer une première rangée de tenons. La dernière étape de translation permet de mettre en position les tenons pour le blocage de la connexion à baïonnette.

En outre, la présente invention concerne un procédé de désassemblage de deux tronçons de colonne assemblés au moyen d'un connecteur selon l'invention (avec l'une quelconque des combinaisons de modes de réalisation précédemment décrits). Pour ce procédé, on peut mettre en œuvre les étapes suivantes :
a) on déverrouille la bague de verrouillage, par rotation de la bague de verrouillage, cette rotation, de préférence au moyen d'une rotation unique (cas des tenons ayant la même plage angulaire), qui déverrouille les deux éléments connecteurs qui peuvent avoir des mouvement relatifs par rapport à la bague de verrouillage ;
b) on libère le deuxième élément connecteur de la bague de verrouillage, ainsi, le deuxième élément connecteur est extrait de la bague de verrouillage, alors que le premier élément connecteur est déverrouillé, mais est bloqué en translation dans la bague de verrouillage, notamment par au moins un moyen de retenue ;
c) on démonte le moyen de retenue entre la bague de verrouillage et le premier élément connecteur, ainsi le premier élément connecteur est positionné dans la bague de verrouillage, en étant déverrouillé et libre de mouvement ; et
d) on retire la bague de verrouillage du premier élément connecteur, ainsi l'élément connecteur mâle est extrait de la bague de verrouillage.
Pour l'étape a), lors du déverrouillage, la rotation de la bague libère la coopération respective des première et troisième séries de tenons, et des deuxième et quatrième séries de tenons. La rotation permettant le déverrouillage simultané des deux connexions de type à baïonnette est une rotation d'un angle correspondant à la plage angulaire des tenons. Par exemple, si les tenons ont une plage angulaire de 36°, alors la rotation de déverrouillage est une rotation de 36°.
Pour l'étape c), le démontage du premier moyen de retenue peut être mis en œuvre par désassemblage de deux demi-coquilles, au sein d'une gorge formée dans le premier élément connecteur. Le moyen de retenue peut avoir une saillie qui coopère avec une rainure dans la bague de verrouillage.
De la même manière, il peut être prévu le démontage du deuxième moyen de retenue par le désassemblage de deux demi-coquilles au sein d'une gorge formée dans le deuxième élément connecteur. Le moyen de retenue peut avoir un épaulement qui coopère avec l'extrémité de la bague de verrouillage. Le démontage du deuxième moyen de retenue sur le deuxième élément connecteur peut être réalisé postérieurement ou simultanément à l'une des étapes du procédé de désassemblage.
Les étapes de retrait/libération consistent à extraire l'élément connecteur concerné de la bague de verrouillage, à partir d'une position où l'élément connecteur est positionné dans la bague de verrouillage.
Dans certains cas, les étapes de retrait/libération correspondent à un seul mouvement de translation relative de la bague par rapport à l'élément connecteur. C'est le cas par exemple, lorsque la série de tenons concernée ne comprend qu'une rangée de tenons, ou lorsque la série de tenons concernée comporte une pluralité de rangées de tenons inscrits dans des diamètres différents, ou lorsque les tenons sont alignés. Cette translation permet de libérer les tenons de la connexion à baïonnette.
Dans d'autres cas, les étapes de retrait/libération correspondent à un mouvement combiné comprenant une première étape de translation, suivie d'une première rotation et suivie d'une deuxième translation. Il s'agit de mouvements relatifs entre la bague de verrouillage et l'élément connecteur concerné. C'est par exemple le cas, lorsque la série de tenons concernée comprend une pluralité de tenons décalés et inscrits dans des diamètres identiques. La première étape de translation permet de désengager les tenons de la deuxième série de tenons. Les deux derniers mouvements relatifs permettent de faire passer une première rangée de tenons.

Pour le mode de réalisation, pour lequel deux jeux axiaux sont prévus de part et d'autre entre les éléments connecteurs et la bague de verrouillage, la répartition des jeux axiaux est illustrée sur les figures 7a à 7d pour différentes étapes de l'assemblage. Ces figures sont des vues en coupe similaires à la vue en coupe de la figure 3, pour laquelle seul un côté de la vue en coupe est représenté. Ces figures illustrent des étapes de l'assemblage de l'élément connecteur 8 avec l'élément connecteur 7 au moyen d'une bague de verrouillage 9 et des moyens de retenue démontables 10 et 11. Le connecteur comprend un manchon d'étanchéité 15. Sur ces figures, la référence C indique un contact entre les pièces, et la référence J indique l'existence d'un jeu entre les éléments. La valeur du jeu J peut varier en fonction de l'étape de connexion. Pour cet exemple, les jeux axiaux J sont strictement positifs, peuvent être différents ou identiques et peuvent valoir 0.5, 1, 1.5, 2, 2.5, 3, 4 ou 5 mm.

Le verrouillage du connecteur peut être réalisé par les opérations suivantes, lorsque le premier élément connecteur est déjà monté dans la bague de verrouillage :
1. Phase d'approche (figure 7a) : emboitement de la bague de verrouillage 9 autour du deuxième élément connecteur 8. Les tenons du deuxième élément connecteur 8 passent entre ceux de la bague de verrouillage 9.
2. L'emboitement se poursuit (figure 7b), la bague de verrouillage 9 vient en contact sur le moyen de guidage 11. A ce stade, un jeu (par exemple de 1 mm) est introduit au niveau des tenons de la deuxième (deuxième élément connecteur 8) et de la quatrième séries (bague de verrouillage 9).
3. A la fin de l'emboitement (figure 7c), l'extrémité du deuxième élément connecteur 8 vient en contact avec l'extrémité du premier élément connecteur 7. Un jeu, par exemple d'une valeur de 1 mm peut être introduit au niveau des tenons de la première (premier élément connecteur 7) et de la troisième (bague de verrouillage 9) séries. A la fin de cette étape le connecteur est prêt à être verrouillé.
4. La rotation de la bague pour le verrouillage (figure 7d) vient mettre en coïncidence les quatre rangées de tenons. Celle-ci ne risque plus d'être entravée car la surface de glissement se situe sur une zone peu sollicitée. A l'issue du verrouillage, la mise en tension de la conne montante vient mettre les dentures des deux systèmes à baïonnette en contact. Ainsi, un contact C est réalisé au niveau des tenons des quatre séries de tenons, et un jeu axial existe entre les extrémités des deux éléments connecteurs 7 et 8. De plus, un jeu peut être présent entre l'extrémité du manchon d'étanchéité et l'extrémité du deuxième élément connecteur 8.

Le dispositif selon l'invention offre une solution intéressante pour monter rapidement et simplement une colonne montante, sans positionnement relatif précis à réaliser avant l'assemblage. En effet, la connexion d'un tronçon de colonne montante à un autre tronçon de colonne montante peut être réalisée en une unique opération au moyen de la rotation de la bague de verrouillage. Cette connexion permet de mettre en communication et de rendre étanche deux tronçons de colonne montante. En outre, grâce à sa conception, le connecteur peut être facilement démontable et inspectable, ce qui facilite les opérations de maintenance. De plus, un grand nombre de verrouillage/déverrouillage est permis par l'utilisation de connexions à baïonnette.

## Revendications

1. Connecteur pour assembler deux tronçons (4) de colonne montante (1), comportant un premier tronçon (4) de colonne prolongé par un premier élément connecteur (7) pourvu d'une première série de tenons (14) sur sa surface extérieure, un deuxième élément de tronçon (4) de colonne prolongé par un deuxième élément connecteur (8) pourvu d'une deuxième série de tenons (12) sur sa surface extérieure, une bague de verrouillage (9) assemblant lesdits deux éléments connecteurs (7, 8), ladite bague de verrouillage (9) comprenant une troisième (19) et une quatrième (20) séries de tenons sur sa surface intérieure aptes à coopérer respectivement avec lesdites première (14) et deuxième (12) séries de tenons, **caractérisé en ce que** ledit connecteur (5) comporte en outre des moyens de retenue (10, 11) de ladite bague de verrouillage (9) par rapport auxdits éléments connecteur (7, 8), lesdits moyens de retenue (10, 11) étant au moins partiellement démontables.

2. Connecteur selon la revendication 1, dans lequel lesdits moyens de retenue (10, 11) sont situés aux deux extrémités de ladite bague de verrouillage (9).

3. Connecteur selon l'une des revendications précédentes, dans lequel ledit connecteur comporte en outre un manchon d'étanchéité (15), ledit manchon d'étanchéité (15) étant emmanché dans lesdits deux éléments connecteurs (7, 8), de préférence en étant fixé dans un desdits premier (7) ou deuxième (8) éléments connecteurs.

4. Connecteur selon l'une des revendications précédentes, dans lequel lesdits moyens de retenue de ladite bague de verrouillage (9) comprennent des moyens de maintien (10) de ladite bague de verrouillage (9) à une première extrémité de ladite bague de verrouillage (9), et des moyens de guidage (11) de ladite bague de verrouillage (9) à la deuxième extrémité de ladite bague de verrouillage (9).

5. Connecteur selon la revendication 4, dans lequel lesdits moyens de maintien (10) de ladite bague de verrouillage (9) comportent au moins une saillie pénétrant dans une rainure de ladite bague de verrouillage (9).

6. Connecteur selon l'une des revendications 4 ou 5, dans lequel lesdits moyens de guidage (11) de ladite bague de verrouillage (9) comportent au moins une surface cylindrique.

7. Connecteur selon l'une des revendications précédentes, dans lequel chaque moyen de retenue (10, 11) est formé par deux demi-anneaux fixés ensemble.

8. Connecteur selon la revendication 7, dans lequel, chaque demi-anneau est monté dans une gorge (16, 18) formée dans l'un desdits éléments connecteurs (7, 8).

9. Connecteur selon l'une des revendications 1 à 3, dans lequel chaque élément connecteur (7, 8) comporte un moyen de retenue (10, 11).

10. Connecteur selon la revendication 6, dans lequel un moyen de retenue (10) comporte au moins un pion démontable (22).

11. Connecteur selon l'une des revendications précédentes, dans lequel les tenons desdites première (14) et deuxième (12) séries de tenons sont en saillie sur des plages angulaires identiques.

12. Connecteur selon l'une des revendications précédentes, dans lequel chaque série de tenons comporte au moins une rangée de tenons, et de préférence deux rangées de tenons.

13. Connecteur selon la revendication 12, dans lequel lesdits tenons de rangées de tenons consécutives d'une même série de tenons sont alignées.

14. Connecteur selon l'une des revendications 12 ou 13, dans lequel lesdites rangées de tenons d'au moins une série de tenons sont inscrites dans des diamètres identiques.

15. Connecteur selon l'une des revendications 12 à 14, dans lequel les rangées de tenons de chaque série de tenons comportent au moins trois, de préférence quatre tenons.

16. Connecteur selon l'une des revendications précédentes, dans lequel chaque série de tenons comporte au moins deux rangées de quatre tenons.

17. Connecteur selon l'une des revendications précédentes, dans lequel ledit premier élément connecteur (7) comporte, en son extrémité, au moins un créneau (17) s'engageant dans un creux (13) dudit deuxième élément connecteur (8).

18. Connecteur selon l'une des revendications précédentes, dans lequel un premier jeu axial est prévu entre ladite première série de tenons (14) et ladite troisième série de tenons (19), et un deuxième jeu axial est prévu entre ladite deuxième série (12) de tenons et ladite quatrième série de tenons (20).

19. Connecteur selon la revendication 18, dans lequel lesdits premier et deuxième jeux sont compris entre 0,5 et 30 mm.

20. Colonne montante (1) comprenant au moins deux tronçons (4) de colonne montante assemblés par un connecteur (5) selon l'une des revendications précédentes.

21. Procédé d'assemblage de deux tronçons (4) de colonne montante au moyen d'un connecteur (5) selon l'une des revendications 1 à 19, **caractérisé en ce qu'**on réalise les étapes suivantes :
a) on met en position ladite bague de verrouillage (9) autour dudit premier élément connecteur (7) ;
b) on monte le premier moyen de retenue (10) pour maintenir ladite bague de verrouillage (9) par rapport audit premier élément connecteur ;
c) on dispose bout à bout le premier et le deuxième élément connecteur en mettant en position ladite bague de verrouillage (9) autour dudit deuxième élément connecteur (8) pourvu d'un deuxième moyen de retenue (11), de sorte que le deuxième moyen de retenue (11) coopère avec ladite bague de verrouillage (9) ; et
d) on verrouille ladite bague de verrouillage (9) par rotation.

22. Procédé selon la revendication 21, dans lequel les étapes de mise en position sont mises en œuvre par translation relative de ladite bague de verrouillage (9) par rapport auxdits éléments connecteurs (7, 8).

23. Procédé de désassemblage de deux tronçons de colonne montante au moyen d'un connecteur (5) selon l'une des revendications 1 à 19, **caractérisé en ce qu'**on réalise les étapes suivantes :
a) on déverrouille ladite bague de verrouillage (9) par rotation ;
b) on libère ledit deuxième élément connecteur (8) de ladite bague de verrouillage (9) ;
c) on démonte ledit premier moyen de retenue (10) ; et
d) on libère ledit premier élément connecteur (7) de ladite bague de verrouillage (9).

24. Procédé selon la revendication 23, dans lequel les étapes de libération sont mises en œuvre par translation relative sur des éléments connecteurs (7, 8) par rapport à ladite bague de verrouillage (9).

## Patentansprüche

1. Verbinder, um zwei Abschnitte (4) einer Steigleitung (1) zusammenzufügen, umfassend einen ersten Leitungsabschnitt (4), welcher durch ein erstes Verbindungselement (7) verlängert wird, welches mit einer ersten Reihe von Zapfen (14) an seiner äußeren Fläche versehen ist, ein zweites Leitungsabschnittselement (4), welches durch ein zweites Verbindungselement (8) verlängert wird, welches mit einer zweiten Reihe von Zapfen (12) an seiner äußeren Fläche versehen ist, wobei ein Verriegelungsring (9) die beiden Verbindungselemente (7, 8) zusammenfügt, wobei der Verriegelungsring (9) eine dritte (19) und eine vierte (20) Reihe von Zapfen an seiner inneren Fläche aufweist, welche geeignet sind, jeweils mit der ersten (14) und zweiten (12) Reihe von Zapfen zusammenzuwirken, **dadurch gekennzeichnet, dass** der Verbinder (5) außerdem Mittel zum Zurückhalten (10, 11) des Verriegelungsrings (9) in Bezug auf die Verbindungselemente (7, 8) umfasst, wobei die Rückhaltemittel (10, 11) zumindest teilweise demontierbar sind.

2. Verbinder nach Anspruch 1, bei welchem sich die Rückhaltemittel (10, 11) an beiden Enden des Verriegelungsrings (9) befinden.

3. Verbinder nach einem der vorhergehenden Ansprüche, bei welchem der Verbinder außerdem eine Dichtungsbuchse (15) umfasst, wobei die Dichtungsbuchse (15) in die beiden Verbindungselemente (7, 8) eingepasst ist, vorzugsweise indem sie in einem des ersten (7) oder zweiten (8) Verbindungselements befestigt ist.

4. Verbinder nach einem der vorhergehenden Ansprüche, bei welchem die Mittel zum Zurückhalten des Verriegelungsrings (9) Mittel zum Halten (10) des Verriegelungsrings (9) an einem ersten Ende des Verriegelungsrings (9) und Mittel zur Führung (11) des Verriegelungsrings (9) an dem zweiten Ende des Verriegelungsrings (9) aufweisen.

5. Verbinder nach Anspruch 4, bei welchem die Mittel zum Halten (10) des Verriegelungsrings (9) mindestens einen Vorsprung aufweisen, welcher in eine Nut des Verriegelungsrings (9) eindringt.

6. Verbinder nach einem der Ansprüche 4 oder 5, bei welchem die Mittel zur Führung (11) des Verriegelungsrings (9) mindestens eine zylindrische Fläche aufweisen.

7. Verbinder nach einem der vorhergehenden Ansprüche, bei welchem jedes Rückhaltemittel (10, 11) durch zwei aneinander befestigte Halbringe ausgebildet ist.

8. Verbinder nach Anspruch 7, bei welchem jeder Halbring in einer Kehle (16, 18) montiert ist, welche an einem der Verbindungselemente (7, 8) ausgebildet ist.

9. Verbinder nach einem der Ansprüche 1 bis 3, bei welchem jedes Verbindungselement (7, 8) ein Rückhaltemittel (10, 11) umfasst.

10. Verbinder nach Anspruch 6, bei welchem ein Rückhaltemittel (10) mindestens einen demontierbaren Bolzen (22) umfasst.

11. Verbinder nach einem der vorhergehenden Ansprüche, bei welchem die Zapfen der ersten (14) und zweiten (12) Reihe von Zapfen über identische Winkelbereiche vorstehen.

12. Verbinder nach einem der vorhergehenden Ansprüche, bei welchem jede Reihe von Zapfen mindestens eine Aneinanderreihung von Zapfen und vorzugsweise zwei Aneinanderreihung von Zapfen umfasst.

13. Verbinder nach Anspruch 12, bei welchem die Zapfen von Aneinanderreihungen von aufeinander folgenden Zapfen einer gleichen Reihe von Zapfen ausgerichtet sind.

14. Verbinder nach einem der Ansprüche 12 oder 13, bei welchem die Aneinanderreihungen von Zapfen von mindestens einer Reihe von Zapfen auf identischen Durchmessern angeordnet sind.

15. Verbinder nach einem der Ansprüche 12 bis 14, bei welchem die Aneinanderreihungen von Zapfen von jeder Reihe von Zapfen mindestens drei, vorzugsweise vier, Zapfen umfassen.

16. Verbinder nach einem der vorhergehenden Ansprüche, bei welchem jede Reihe von Zapfen mindestens zwei Aneinanderreihungen von vier Zapfen umfasst.

17. Verbinder nach einem der vorhergehenden Ansprüche, bei welchem das erste Verbindungselement (7) an seinem Ende mindestens eine Zinne (17) umfasst, welche in eine Aussparung (13) des zweiten Verbindungselements (8) eingreift.

18. Verbinder nach einem der vorhergehenden Ansprüche, bei welcher ein erstes axiales Spiel zwischen der ersten Reihe von Zapfen (14) und der dritten Reihe von Zapfen (19) vorgesehen ist und ein zweites axiales Spiel zwischen der zweiten Reihe (12) von Zapfen und der vierten Reihe von Zapfen (20) vorgesehen ist.

19. Verbinder nach Anspruch 18, bei welchem das erste und zweite Spiel zwischen 0,5 und 30 mm liegen.

20. Steigleitung (1), welche mindestens zwei Leitungsabschnitte (4) umfasst, welche durch einen Verbinder (5) nach einem der vorhergehenden Ansprüche zusammengefügt sind.

21. Verfahren zum Zusammenfügen von zwei Abschnitten (4) einer Steigleitung mit Hilfe eines Verbinders (5) nach einem der Ansprüche 1 bis 19, **dadurch gekennzeichnet, dass** die folgenden Schritte durchgeführt werden:
a) der Verriegelungsring (9) wird um das erste Verbindungselement (7) herum in Position gebracht;
b) das erste Rückhaltemittel (10) wird montiert, um den Verriegelungsring (9) in Bezug auf das erste Verbindungselement zu halten;
c) das erste und das zweite Verbindungselement werden aneinandergereiht, indem der Verriegelungsring (9) um das zweite Verbindungselement (8) herum in Position gebracht wird, welches mit einem zweiten Rückhaltemittel (11) versehen ist, so dass das zweite Rückhaltemittel (11) mit dem Verriegelungsring (9) zusammenwirkt; und
d) der Verriegelungsring (9) wird durch Drehung verriegelt.

22. Verfahren nach Anspruch 21, bei welchem die Schritte des Positionierens durch relative Verschiebung des Verriegelungsrings (9) in Bezug auf die Verbindungselemente (7, 8) durchgeführt werden.

23. Verfahren zum Demontieren von zwei Abschnitten einer Steigleitung mit Hilfe eines Verbinders (5) nach einem der Ansprüche 1 bis 19, **dadurch gekennzeichnet, dass** die folgenden Schritte durchgeführt werden:
a) der Verriegelungsring (9) wird durch Drehung entriegelt;
b) das zweite Verbindungselement (8) wird von dem Verriegelungsring (9) befreit;
c) das erste Rückhaltemittel (10) wird demontiert; und
d) das erste Verbindungselement (7) wird von dem Verriegelungsring (9) befreit.

24. Verfahren nach Anspruch 23, bei welchem die Schritte des Befreiens durch relative Verschiebung der Verbindungselemente (7, 8) in Bezug auf den Verriegelungsring (9) durchgeführt werden.

## Claims

1. Connector for assembling two sections (4) of riser (1), having a first riser section (4) extended by a first connecting element (7) provided with a first set of lugs (14) on its outer surface, a second riser section element (4) extended by a second connecting element (8) provided with a second set of lugs (12) on its outer surface, a locking ring (9) that joins said two connecting elements (7, 8) together, said locking ring (9) comprising a third (19) and a fourth (20) set of lugs on its inner surface that are able to engage with said first (14) and second (12) sets of lugs, respectively, **characterized in that** said connector (5) also has retaining means (10, 11) for retaining said locking ring (9) with respect to said connecting elements (7, 8), said retaining means (10, 11) being at least partially removable.

2. Connector according to Claim 1, wherein said retaining means (10, 11) are situated at the two ends of said locking ring (9).

3. Connector according to either of the preceding claims, wherein said connector also has a sealing sleeve (15), said sealing sleeve (15) being fitted in said two connecting elements (7, 8), preferably being fixed in one of said first (7) or second (8) connecting elements.

4. Connector according to one of the preceding claims, wherein said retaining means for retaining said locking ring (9) comprise holding means (10) for holding said locking ring (9) at a first end of said locking ring (9), and guide means (11) for guiding said locking ring (9) at the second end of said locking ring (9) .

5. Connector according to Claim 4, wherein said holding means (10) for holding said locking ring (9) have at least one protrusion that passes into a slot in said locking ring (9).

6. Connector according to either of Claims 4 and 5, wherein said guide means (11) for guiding said locking ring (9) have at least one cylindrical surface.

7. Connector according to one of the preceding claims, wherein each retaining means (10, 11) is formed by two half-rings that are fixed together.

8. Connector according to Claim 7, wherein each half-ring is mounted in a groove (16, 18) formed in one of said connecting elements (7, 8).

9. Connector according to one of Claims 1 to 3, wherein each connecting element (7, 8) has a retaining means (10, 11).

10. Connector according to Claim 6, wherein one retaining means (10) has at least one removable pin (22) .

11. Connector according to one of the preceding claims, wherein the lugs of said first (14) and second (12) sets of lugs protrude over identical angular ranges.

12. Connector according to one of the preceding claims, wherein each set of lugs has at least one row of lugs, and preferably two rows of lugs.

13. Connector according to Claim 12, wherein said lugs in consecutive rows of lugs of one and the same set of lugs are aligned.

14. Connector according to either of Claims 12 and 13, wherein said rows of lugs of at least one set of lugs are inscribed in identical diameters.

15. Connector according to one of Claims 12 to 14, wherein the rows of lugs of each set of lugs have at least three, preferably four lugs.

16. Connector according to one of the preceding claims, wherein each set of lugs has at least two rows of four lugs.

17. Connector according to one of the preceding claims, wherein said first connecting element (7) has, at its end, at least one tooth (17) that fits in a recess (13) in said second connecting element (8).

18. Connector according to one of the preceding claims, wherein a first axial clearance is provided between said first set of lugs (14) and said third set of lugs (19), and a second axial clearance is provided between said second set (12) of lugs and said fourth set of lugs (20).

19. Connector according to Claim 18, wherein said first and second clearances are between 0.5 and 30 mm.

20. Riser (1) comprising at least two riser sections (4) joined together by a connector (5) according to one of the preceding claims.

21. Method for assembling two riser sections (4) by means of a connector (5) according to one of Claims 1 to 19, **characterized in that** the following steps are carried out:
a) said locking ring (9) is positioned around said first connecting element (7);
b) the first retaining means (10) for holding said locking ring (9) with respect to said first connecting element is mounted;
c) the first and the second connecting element are disposed end-to-end by positioning said locking ring (9) around said second connecting element (8) provided with a second retaining means (11), such that the second retaining means (11) engages with said locking ring (9); and
d) said locking ring (9) is locked by rotation.

22. Method according to Claim 21, wherein the positioning steps are carried out by moving said locking ring (9) in translation relative to said connecting elements (7, 8).

23. Method for disassembling two riser sections by means of a connector (5) according to one of Claims 1 to 19, wherein the following steps are carried out:
a) said locking ring (9) is unlocked by rotation;
b) said second connecting element (8) is released from said locking ring (9);
c) said first retaining means (10) is removed; and
d) said first connecting element (7) is released from said locking ring (9).

24. Method according to Claim 23, wherein the releasing steps are carried out by moving the connecting elements (7, 8) in translation relative to said locking ring (9).
